# EUROPÄISCHE PATENTSCHRIFT

(11) **EP 1 118 529 B1**
(45) Veröffentlichungstag und Bekanntmachung des Hinweises auf die Patenterteilung: **19.02.2003**
(21) Anmeldenummer: 00125968.8
(22) Anmeldetag: 28.11.2000
(51) Int. Cl.: B62D 35/00

(54) **Strömungsleitvorrichtung für ein Kraftfahrzeug**
Flow deflector for a motor vehicle
Elément de guidage de l'écoulement pour véhicule automobile

(30) Priorität: 21.01.2000 DE 10002511
(43) Veröffentlichungstag der Anmeldung: 25.07.2001
(73) Patentinhaber: Dr.Ing. h.c.F. Porsche Aktiengesellschaft, 70435 Stuttgart (DE)
(72) Erfinder: Brin, Constantin, 70499 Stuttgart (DE); Mann, Wolf-Dieter, 71229 Leonberg (DE); Durm Jürgen, 75417 Mühlacker (DE); Wiegand, Thomas, 71277 Rutesheim (DE); Adams, Stefan, 71229 Leonberg-Warmbronn (DE)

(56) Entgegenhaltungen:
- EP-A- 0 367 230
- DE-A- 4 207 658

## Beschreibung

Die Erfindung geht aus von einer Strömungsleitvorrichtung für ein Kraftfahrzeug gemäß den Merkmalen des Oberbegriffs des Anspruchs 1, wie sie in dem Dokument EP 0 367 230 A beschrieben ist.

Strömungsleitvorrichtungen die gegenüber der Fahrzeugkarosserie zwischen einer eingefahrenen Ruheposition und einer ausgefahrenen Wirkposition verstellbar sind, sind Stand der Technik (s. z.B. DE 42 07 658 C2). Dabei kann über eine entsprechende Verstelleinheit der in der Wirkposition befindliche Heckspoiler so verstellt werden, daß beispielsweise in Abhängigkeit von der Fahrgeschwindigkeit jeweils die aerodynamisch günstigste Ausrichtung des ausgefahrenen Luftleitprofils gewählt ist. Bei der geometrischen Auslegung der Strömungsleitvorrichtung kommt es zu Zielkonflikten, wenn die in der Ruheposition befindliche Strömungsleitvorrichtung der Außenkontur der Fahrzeugkarosserie angepaßt sein soll, in ihrer Wirkposition jedoch ein Luftleitprofil bieten soll, bei dessen Umströmung eine nach unten gerichtete Kraft erzeugt wird, die einer nach oben gerichteten Auftriebskraft entgegenwirkt oder eine nach unten gerichtete Abtriebskraft verstärkt.

Die Aufgabe wird erfindungsgemäß durch die im kennzeichnenden Teil des Anspruchs 1 angegebenen Merkmale gelöst.

Durch die zusätzlich an der Strömungsleitvorrichtung vorgesehene ausfahrbare Flügelklappe verbessert sich die aerodynamische Wirkung der Strömungsleitvorrichtung, bei gleichzeitig gewünschter Erzeugung einer nach unten gerichteten Abtriebskraft. Auf der anderen Seite entspricht die Strömungsleitvorrichtung im abgelegten Zustand bzw. in ihrer Ruheposition der Form der Außenkontur des Kraftfahrzeuges und ist dabei zusammen mit ihrer Verstelleinheit platzsparend im Kraftfahrzeug untergebracht.

In den Unteransprüchen sind weitere vorteilhafte Ausgestaltungen und Verbesserungen der erfindungsgemäßen Strömungsleitvorrichtung enthalten. Die in der Ruheposition innerhalb des Flügelelementes aufgenommene Flügelklappe kann über am Flügelelement vorgesehene Kulissen in eine der Wirkposition der Strömungsleitvorrichtung entsprechende Ausfahrposition überführt werden. Damit die Strömungsleitvorrichtung in die Betriebsstellung gelangt, wird mit Hilfe einer Verstelleinheit die Strömungsleitvorrichtung translatorisch ausgefahren, um einen bestimmten Winkel gedreht, bevor die Flügelklappe über einen Hebeltrieb bis an den hinteren Rand des Flügelelementes ausgefahren wird. Die für diese Kinematik vorgesehene Verstelleinheit besteht im Wesentlichen aus einem Hubelement und einer längenveränderlichen Koppelstange, die beide an ihrem einen Ende an der Karosserie befestigt sind, während das andere Ende des Hubzylinders am Flügelelement drehbar gelagert ist und das andere Ende der Koppelstange über den Hebeltrieb mit der in der Kulisse des Flügelelementes geführten Flügelklappe verbunden ist.

In vorteilhafter Weise ist die Koppelstange als Gasdruckfeder ausgebildet, die sowohl die Einfahr- als auch die Ausfahrbewegung der Strömungsleitvorrichtung unterstützt und sicherstellt, daß die Flügelklappe solange innerhalb des Flügelelementes in ihrer Ruheposition verharrt, bis das Flügelelement seine eigentliche Endlage erreicht hat.

Das Flügelelement der Strömungsleitvorrichtung ist durch zwei Verstelleinheiten gehalten und geführt, die im Wesentlichen an den beiden Enden des Flügelelementes angeordnet sind. Damit kann der sich zwischen den beiden Verstelleinheiten ausbildende Bauraum beispielsweise als Teil eines Kofferraumes genutzt werden.

Ein Ausführungsbeispiel der Erfindung ist in der Zeichnung dargestellt und wird nachfolgend näher erläutert.

Es zeigen:
- Fig. 1: das Heckteil eines Kraftfahrzeuges mit einer Strömungsleitvorrichtung in Ruheposition,
- Fig. 2: das Heckteil eines Kraftfahrzeuges mit einer Strömungsleitvorrichtung in Wirkposition,

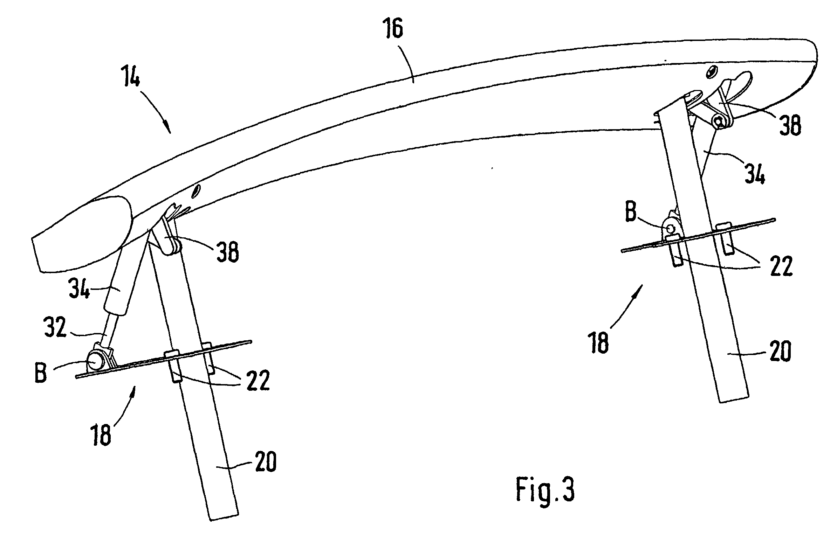

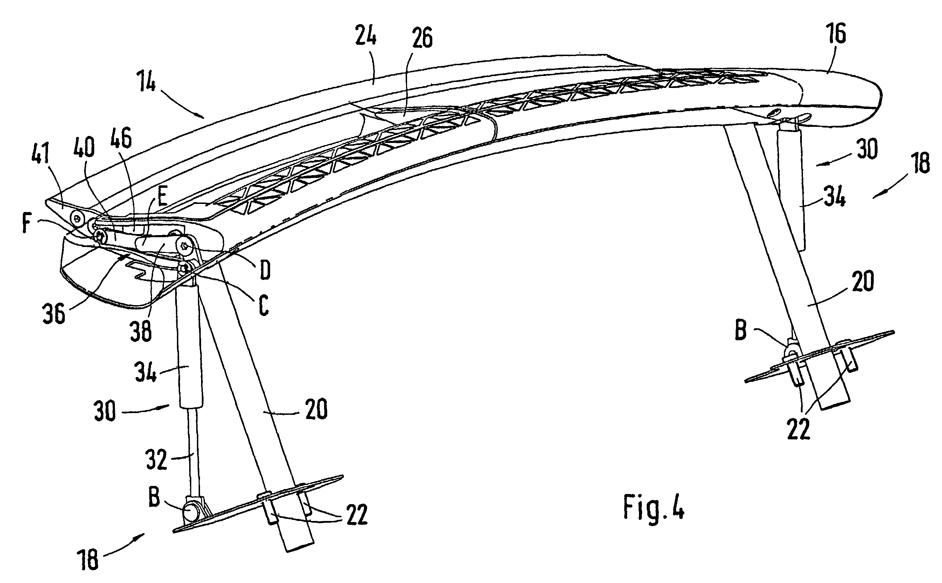

- Fig. 3 und 4: zwei Ansichten der Strömungsleitvorrichtung,
- Fig. 5a: die Strömungsleitvorrichtung in Ruheposition,
- Fig. 5b: die Strömungsleitvorrichtung in einer Zwischenstellung und
- Fig. 5c: die Strömungsleitvorrichtung in ihrer ausgefahrenen Endlage,

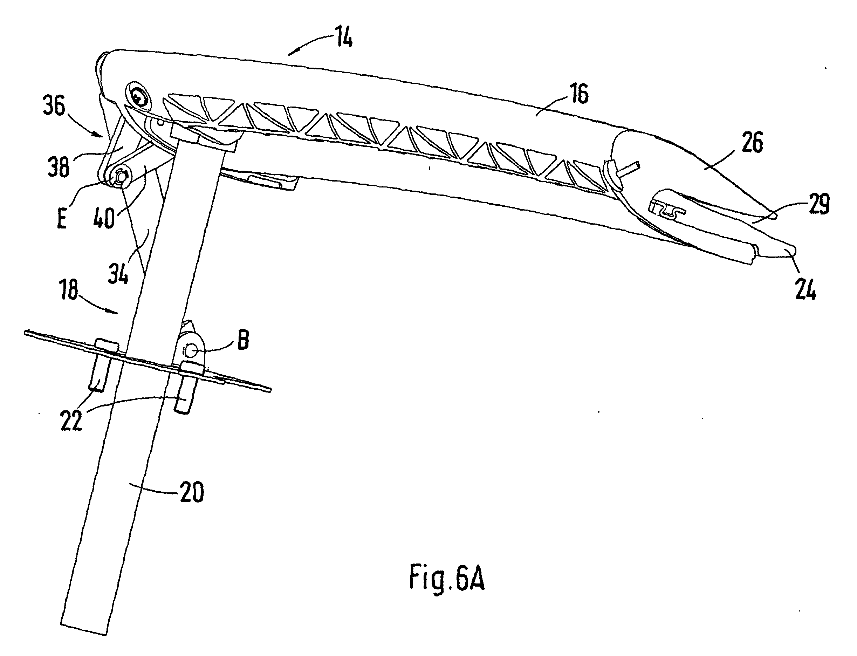

- Fig. 6a: eine Schnittdarstellung der Strömungsleitvorrichtung mit eingefahrener Flügelklappe und

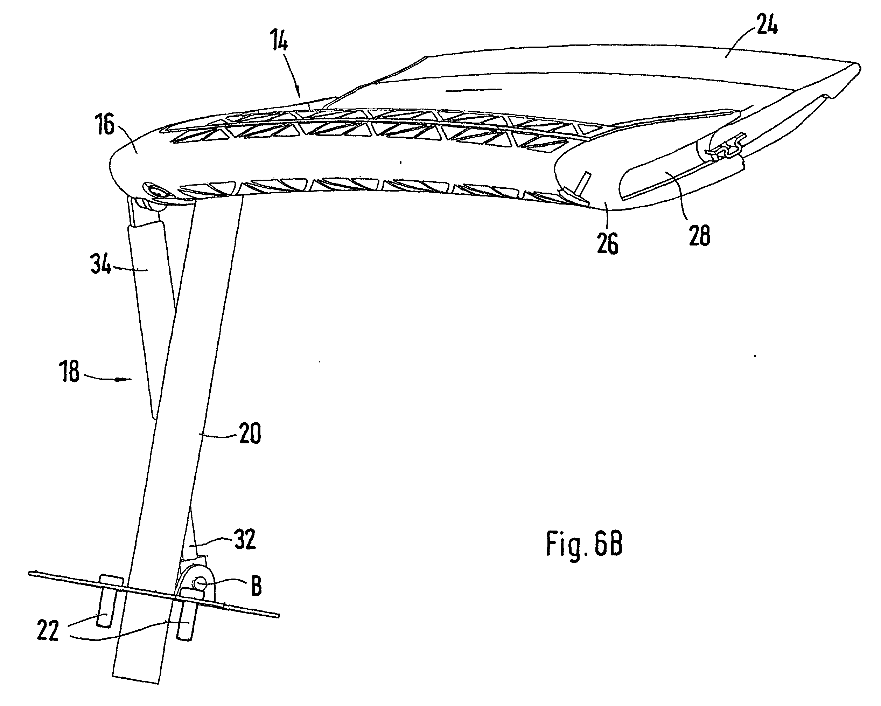

- Fig. 6b: eine Schnittdarstellung der Strömungsleitvorrichtung mit ausgefahrener Flügelklappe und
- Fig. 7a und 7b: zwei weitere Schnittdarstellungen der Strömungsleitvorrichtung mit ein- und ausgefahrener Position der Flügelklappe.

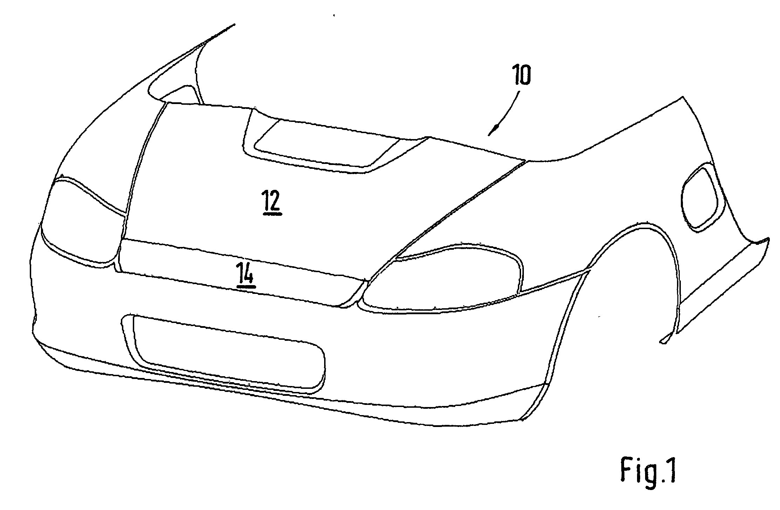

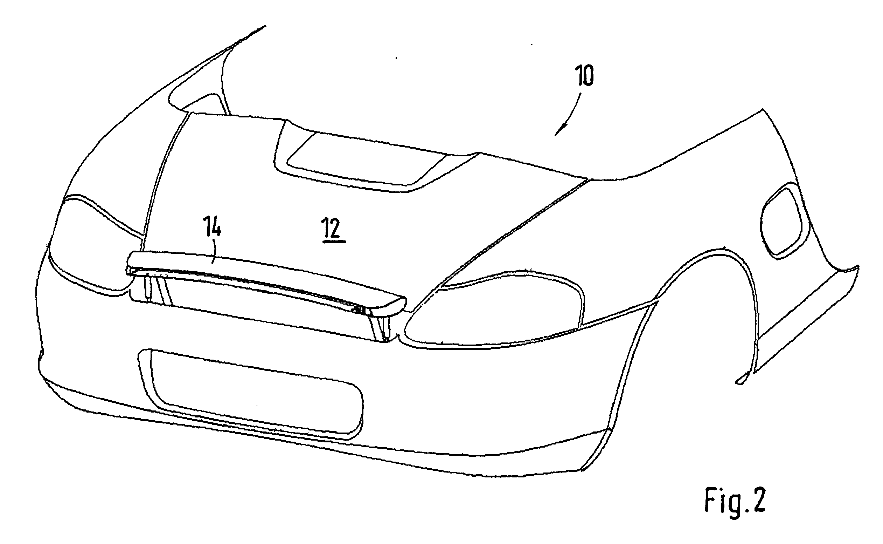

Das in den Figuren 1 und 2 dargestellte Heckteil 10 eines Kraftfahrzeuges weist eine in Fahrtrichtung des Kraftfahrzeuges gesehen hinter einer Kofferraumhaube 12 angeordnete Strömungsleitvorrichtung 14 auf. Die Strömungsleitvorrichtung 14 besteht aus einem Flügelelement 16, das mit Hilfe von zwei im Folgenden noch näher beschriebenen Verstelleinheiten 18 aus einer Ruheposition (siehe Fig. 1) in eine Wirkposition (siehe Fig. 2) überführt werden kann. Die Verstelleinheit 18 besteht aus einem Hubzylinder (nicht dargestellt) mit einer Hubkolbenstange 20, die an einem Drehgelenkpunkt A des Flügelelementes 16 befestigt ist, wobei der Hubzylinder an der Karosserie verschraubt wird (siehe schematisch angedeutete Schraubverbindungen 22). Das Flügelelement 16 ist mit einem Hohlraum versehen, in dem eine Flügelklappe 24 Aufnahme findet. Die Flügelklappe 24 erstreckt sich in ihrer Länge im Wesentlichen zwischen den beiden Drehgelenkpunkten A der beiden Hubkolbenstangen 20. Das Flügelelement 16 weist auf der Höhe der beiden Drehgelenkpunkte A und in der Mitte zwischen den beiden Drehgelenkpunkten A Querwände 26 auf, die mit Kulissen 28, 29 zur Führung und Lagerung der Flügelklappe 24 versehen sind.

Zur Verstelleinheit 18 gehört weiterhin eine als längenveränderliche Koppelstange ausgebildete Gasdruckfeder 30, deren Kolbenstange 32 an einem Punkt B der Karosserie drehbar gelagert ist. Der Zylinder 34 der Gasdruckfeder 30 ist am Gelenkpunkt C mit einem Hebeltrieb 36 verbunden. Der Hebeltrieb 36 besteht aus einem abgewinkelten Steuerhebel 38, der in seinem abgewinkelten Bereich an einem Punkt D drehbar am Flügelelement 16 gelagert ist. Der Steuerhebel 38 ist über ein Gelenkpunkt E mit einem geradlinig ausgebildeten Schubhebel 40 verbunden, der wiederum an einem Gelenkpunkt F mit der in den Kulissen 28, 29 geführten Flügelklappe 24 verbunden ist. Dazu ist die Flügelklappe 24 mit zwei Haltearmen 41 versehen, über die einerseits die Anbindung an den Schubhebel 40 erfolgt und mit denen andererseits die eigentliche Flügelklappe 24 gehalten wird.

Die mit Hilfe der Verstelleinheit 18 ausfahrbare und verschwenkbare Strömungsleitvorrichtung 14 funktioniert folgendermaßen:

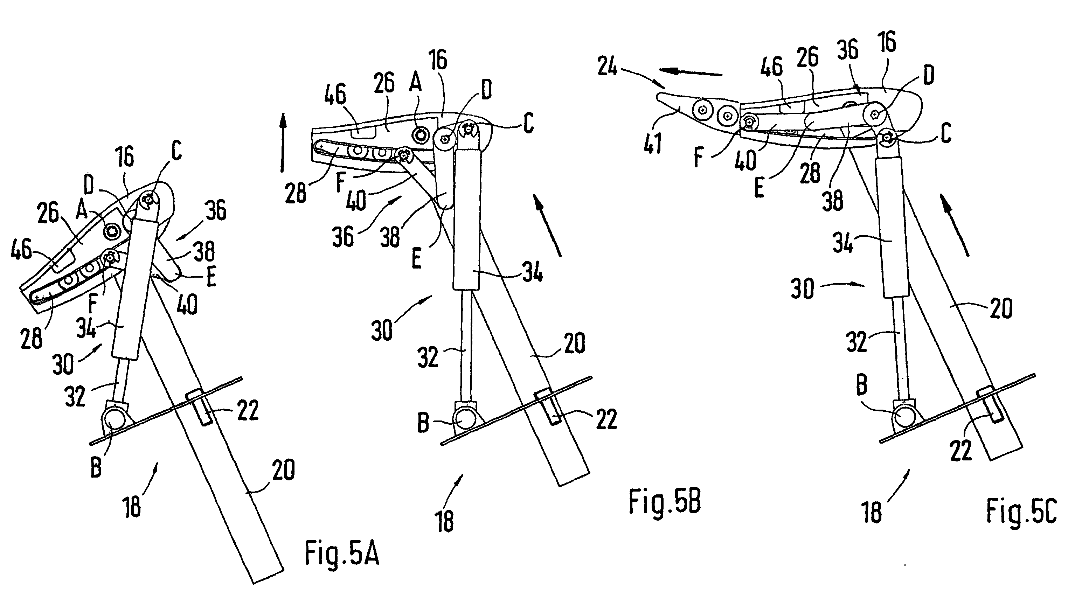

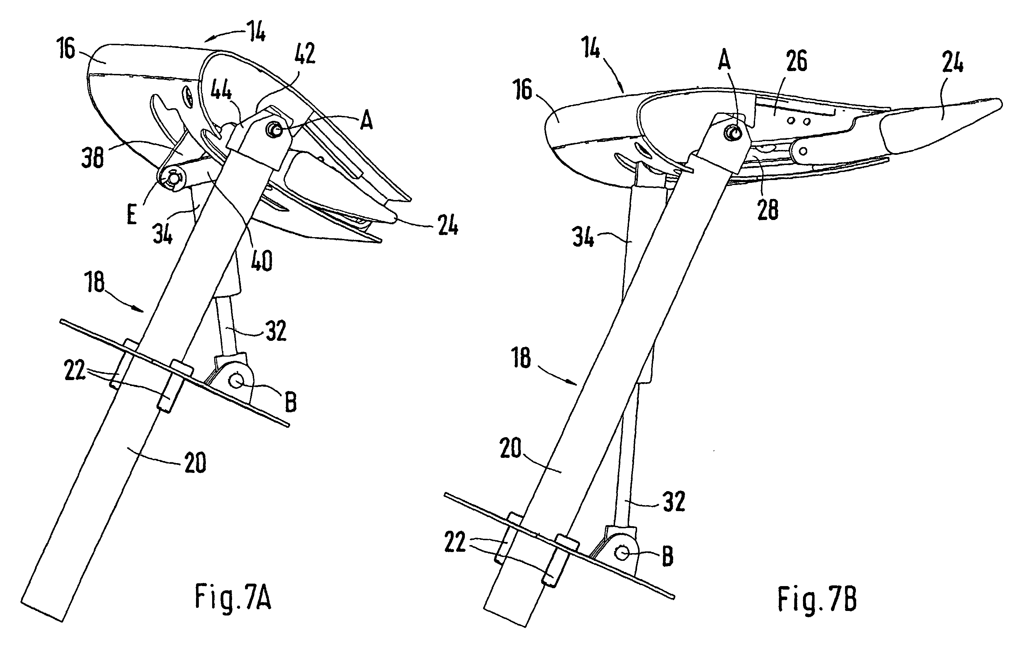

Das Flügelelement 16 der heckseitig angeordneten Strömungsleitvorrichtung 14 schließt im abgelegten Zustand bündig mit der Kofferraumhaube 12 ab und entspricht dabei der Form der Karosseriekontur des Kraftfahrzeuges. Wie anhand von Fig. 5a ersichtlich ist, befindet sich in der Ruheposition des Flügelelementes 16 die Flügelklappe 24 vollständig innerhalb des Flügelelementes 16. Wird die Hubkolbenstange 20, wie anhand des Pfeiles in Fig. 5b dargestellt, translatorisch ausgefahren, hebt sich das Flügelelement 16 von der Fahrzeugkarosserie ab. Solange die Gasdruckfeder 30 ihre Strecklage noch nicht erreicht hat, wird lediglich das Flügelelement 16 ausgefahren, ohne daß sich seine Winkellage ändert und ohne daß die Flügelklappe 24 innerhalb des Flügelelementes 16 bewegt wird. Hat die Gasdruckfeder 30 ihre Strecklage erreicht, so wird, wie in Figur 5b anhand des zweiten Pfeiles angedeutet, das Flügelelement 16 um den Lagerpunkt A gedreht. Die Drehbewegung des Flügelelementes 16 wird mit Hilfe von an der Hubkolbenstange 20 und an den Querwänden des Flügelelementes 16 angeordnete Anschlagflächen 42 und 44 begrenzt (s. Fig. 7a). Das Flügelelement 16 wird soweit angestellt, daß seine Längsachse im Wesentlichen parallel zur Fahrbahnebene verläuft.

Die weiter ausfahrende Hubkolbenstange 20 versetzt nun den Steuerhebel 38 in eine Drehbewegung. Über den Schubhebel 40 wird die Flügelklappe 24 entlang der Kulissen 28, 29 aus dem Flügelelement 16 herausgefahren, wobei die Ausfahrbewegung der Flügelklappe 24 mit Hilfe eines am Flügelelement 16 angeordneten Anschlags 46, gegen den der Schubhebel 40 läuft, begrenzt wird. Die Strömungsleitvorrichtung hat nun ihre Endlage bzw. Betriebsstellung erreicht.

Die Ausfahrhöhe des Flügelelementes 16 kann auf einfache Art und Weise variiert werden, indem in der Gasdruckfeder 30 unterschiedliche Anschläge vorgesehen werden, durch die unterschiedliche Strecklagen der Gasdruckfeder 30 erreichbar sind. Ebenso läßt sich der Anstellwinkel des Flügelelementes 16 bzw. der gesamten Strömungsleitvorrichtung 14 variieren, indem die in Fig. 7a und 7b ausgebildeten Anschlagflächen 42 und 44 verändert werden. Die beiden für das Ausfahren des Flügelelementes 16 vorgesehenen Hubkolbenstangen 20 können auf einfache Art und Weise durch einen einzigen motorischen Antrieb betätigt werden. Damit läßt sich die vorbeschriebene Strömungsleitvorrichtung 14 auf einfache Art und Weise an unterschiedliche Fahrzeugkarosserien anpassen.

## Patentansprüche

1. Strömungsleitvorrichtung (14) für ein Kraftfahrzeug, insbesondere Heckflügel, mit einem Flügelelement (16), das gegenüber der Fahrzeugkarosserie zwischen einer eingefahrenen Ruheposition und einer ausgefahrenen Wirkposition, in welcher das Flügelelement (16) von der Fahrzeugkarosserie absteht, mit Hilfe einer vorzugsweise motorisch angetriebenen Verstelleinheit (18) überführbar ist, und in welcher das ausfahrbare Flügelelement (16) eine Flügelklappe (24) aufnimmt, **dadurch gekennzeichnet, daß** die Flügelklappe (24) durch die Verstelleinheit (18) ebenfalls aus einer im Flügelelement (16) eingenommenen Ruheposition in mindestens eine aus dem Flügelelement (16) herausgefahrene Wirkposition verstellbar ist.

2. Strömungsleitvorrichtung nach Anspruch 1, **dadurch gekennzeichnet, daß** das Flügelelement (16) Kulissen (28, 29) aufweist, in denen die Flügelklappe (24) geführt ist.

3. Strömungsleitvorrichtung nach Anspruch 1 oder 2, **dadurch gekennzeichnet, daß** zwei Kulissen (28) im Bereich der Verstelleinheit (18) und eine weitere Kulisse (29) im Wesentlichen in der Mitte der Längserstreckung des Flügelelements (16) vorgesehen sind.

4. Strömungsleitvorrichtung nach einem der vorhergehenden Ansprüche, **dadurch gekennzeichnet, daß** die Verstelleinheit aus einem Hubelement mit einer Hubkolbenstange und einer längenveränderbaren Koppelstange (30) besteht, die beide an ihrem einen Ende an zwei Karosseriepunkten befestigt sind, während das andere Ende (20) des Hubzylinders am Flügelelement (16) drehbar gelagert ist und das andere Ende (34) der Koppelstange (30) über einen Hebeltrieb (36), der ebenfalls am Flügelelement (16) drehbar gelagert ist, mit der in den Kulissen (28, 29) des Flügelelementes (16) geführten Flügelklappe (24) verbunden ist.

5. Strömungsleitvorrichtung nach Anspruch 4, **dadurch gekennzeichnet, daß** die Koppelstange als Gasdruckfeder (30) ausgebildet ist.

6. Strömungsleitvorrichtung nach Anspruch 4 oder 5, **dadurch gekennzeichnet, daß** das Flügelelement (16) durch zwei Verstelleinheiten (18) gehalten und geführt ist, die im Wesentlichen an den beiden Enden des Flügelelementes (16) angeordnet sind.

7. Strömungsleitvorrichtung nach einem der Ansprüche 4 bis 6, **dadurch gekennzeichnet, daß** die Flügelklappe (24) an ihren Stirnseiten mit zwei Haltearmen (41) verschraubt ist, an denen der Hebeltrieb (36) angebunden ist.

8. Strömungsleitvorrichtung nach einem der vorhergehenden Ansprüche, **dadurch gekennzeichnet, daß** im ausgefahrenen Zustand das durch das Flügelelement (16) und die Flügelklappe (24) gebildete obere Luftleitprofil eine konkave Krümmung aufweist.

9. Strömungsleitvorrichtung nach einem der vorhergehenden Ansprüche, **dadurch gekennzeichnet, daß** sich das Flügelelement (16) in Fahrtrichtung gesehen in seiner Ruheposition bündig hinter einer Kofferraumhaube (12) erstreckt.

## Claims

1. A flow-deflector device (14) for a motor vehicle, in particular a tail vane, with a vane member (16) which can be moved relative to the vehicle bodywork between a retracted rest position and an extended operative position - in which the vane member (16) projects from the vehicle bodywork and in which the extensible vane member (16) receives a vane flap (24) - with the aid of a preferably motor-driven displacement unit (18), **characterized in that** the vane flap (24) is likewise displaceable by the displacement unit (18) from a rest position contained in the vane member (16) into at least one operative position extended from the vane member (16).

2. A flow-deflector device according to Claim 1, **characterized in that** the vane member (16) comprises slotted guides (28, 29) in which the vane flap (24) is guided.

3. A flow-deflector device according to Claim 1 or 2, **characterized in that** two slotted guides (28) are provided in the region of the displacement unit (18) and a further slotted guide (29) is provided substantially in the middle of the longitudinal extension of the vane member (16).

4. A flow-deflector device according to one of the preceding Claims, **characterized in that** the displacement unit comprises a reciprocating member with a reciprocating piston rod and a coupling rod (30) of variable length which are both fastened at one end thereof to two points on the bodywork, whilst the other end (20) of the reciprocating cylinder is mounted rotatably on the vane member (16) and the other end (34) of the coupling rod (30) is connected to the vane flap (24) - guided in the slotted guides (28, 29) of the vane member (16) - by way of a lever drive (36) which is likewise mounted rotatably on the vane member (16).

5. A flow-deflector device according to Claim 4, **characterized in that** the coupling rod is constructed in the form of a gas-compression spring (30).

6. A flow-deflector device according to Claim 4 or 5, **characterized in that** the vane member (16) is held and guided by two displacement units (18) which are arranged substantially at the two ends of the vane member (16).

7. A flow-deflector device according to one of Claims 4 to 6, **characterized in that** the vane flap (24) is bolted at the end faces thereof to two retaining arms (41) to which the lever drive (36) is attached.

8. A flow-deflector device according to one of the preceding Claims, **characterized in that** in the extended state the upper air-guiding profile formed by the vane member (16) and the vane flap (24) has a concave curvature.

9. A flow-deflector device according to one of the preceding Claims, **characterized in that** in its rest position the vane member (16) extends flush behind a boot lid (12) as viewed in the direction of travel.

## Revendications

1. Dispositif de guidage des flux (14) destiné à un véhicule, en particulier aileron arrière, avec un élément d'aileron (16) qui, face à la carrosserie du véhicule, peut pivoter au moyen d'une unité réglable (18), entraînée de préférence par un moteur, entre une position de repos rentrée et une position de fonctionnement sortie, dans laquelle l'élément d'aileron (16) s'éloigne de la carrosserie et dans laquelle cet élément d'aileron (16) déplaçable vers l'extérieur, reçoit un volet d'aileron (24), **caractérisé en ce que** le volet d'aileron (24) peut être également déplacé par l'unité de réglage (18) à partir d'une position de repos rétractée dans l'élément d'aileron (16) dans au moins une position de fonctionnement sortie de l'élément d'aileron (16).

2. Dispositif de guidage des flux selon la revendication 1, **caractérisé en ce que** l'élément d'aileron (16) présente des coulisses (28, 29), dans lesquelles le volet d'aileron (24) est guidé.

3. Dispositif de guidage des flux selon la revendication 1 ou 2, **caractérisé en ce que** deux coulisses (28) sont prévues dans la zone de l'unité réglable (18) et une autre coulisse (29) est prévue principalement au milieu de l'extension longitudinale de l'élément d'aileron (16).

4. Dispositif de guidage des flux selon l'une des revendications précédentes, **caractérisé en ce que** l'unité de réglage se compose d'un élément de levage avec une tige de piston élévateur et d'une tige de couplage (30) dont la longueur est modifiable, qui sont tout deux fixés à l'une de leurs extrémités à deux points de carrosserie pendant que l'autre extrémité (20) du cylindre de levage est montée pivotante sur l'élément d'aileron (16) et que l'autre l'extrémité (34) de la tige de couplage (30) est reliée par un entraînement à levier (36), également monté pivotant sur l'élément d'aileron (16) au volet d'aileron (24) guidé dans les coulisses (28, 29) de l'élément d'aileron (16).

5. Dispositif de guidage des flux selon la revendication 4, **caractérisé en ce que** la tige de couplage est conçue comme ressort à gaz sous pression (30).

6. Dispositif de guidage des flux selon la revendication 4 ou 5, **caractérisé en ce que** l'élément d'aileron (16) est maintenu et guidé par deux unités de réglage (18), qui sont essentiellement placées aux deux extrémités de l'élément d'aileron (16).

7. Dispositif de guidage des flux selon l'une des revendications 4 à 6, **caractérisé en ce que** le volet d'aileron (24) est vissé sur ses faces terminales avec deux bras de support (41), auxquels est relié l'entraînement par levier (36).

8. Dispositif de guidage des flux selon l'une des revendications précédentes, **caractérisé en ce qu'**en position sortie, le profil supérieur de guidage de l'air formé par l'élément d'aileron (16) et le volet d'aileron (24) présente une courbure concave.

9. Dispositif de guidage des flux selon l'une des revendications précédentes, **caractérisé en ce que**, dans la position de repos, l'élément d'aileron (16) s'étend, vu dans le sens de la marche, au ras de l'arrière du capot du coffre (12).
